# EUROPEAN PATENT SPECIFICATION

(11) **EP 2 495 083 B1**
(45) Date of publication and mention of the grant of the patent: **09.10.2013**
(21) Application number: 12156986.7
(22) Date of filing: 24.02.2012
(51) Int. Cl.: B29C 45/17, B29C 45/16, B29C 45/27, B29C 45/73

(54) **Injector for equipment for injection moduling of plastic materials**
Düse für eine Kunststoffspritzgiessvorrichtung
Injecteur pour équipement de moulage par injection de matériaux plastiques

(30) Priority: 01.03.2011 IT TO20110178
(43) Date of publication of application: 05.09.2012
(73) Proprietor: Inglass S.p.A., 31020 San Polo di Piave (Treviso) (IT)
(72) Inventor: ROSSI, Massimo, 31010 Orsago (TV) (IT); DOMENIGHINI, Nicola, 33050 Percenicco (UD) (IT)
(74) Representative: Buzzi, Franco

(56) References cited:
- DE-U1-202010 011 404
- US-A1- 2004 091 562
- US-A1- 2010 089 893

## Description

### Field of the invention

The present invention relates to injectors for equipment for injection moulding of plastic materials, of the type comprising a nozzle body having a terminal, a tubular heater inserted in contact of thermal transmission on the nozzle body and blocked axially to this via an annular retention member, and a thermocouple for controlling the heater.

In injectors of the sort the function of the thermocouple is notoriously that of detecting the temperature of the heater in the area of the terminal of the nozzle body during injection of the plastic material so as to regulate with the maximum precision possible the thermal action of the heater. The relative position between the thermocouple and the heater proves fundamental in so far as even just a slight axial deviation of the thermocouple can determine differences of temperature in the region of 20°C, with consequent errors of control of the heater that result in defects on the pieces moulded.

### Prior art

Current known solutions traditionally envisage providing the annular retention member as elastic ring on which the thermocouple is welded, fitted or rested. In the case of the European patent No. EP-1353787 the elastic ring is instead formed with an outer annular seat, inserted within which is the thermocouple.

In both cases, the necessary precision referred to cannot be obtained both on account of the albeit minimum axial deviations of the thermocouple deriving from the inevitable thermal deformations of the elastic retention ring and for the fact that the thermocouple is not in direct contact either with the heater or with the body of the nozzle.

In the case of the document No. US-A-20040091562, which discloses the preamble of claim 1, the annular retention member formed by the elastic ring has at one end a lip for engagement to the heater.

### Summary of the invention

The object of the present invention is to solve the aforesaid technical problem in a simple and altogether effective way.

According to the invention this object is achieved thanks to an injector of the type defined in Claim 1, the peculiar characteristic of which lies in the fact that the thermocouple has an at least partial turn housed within an annular seat defined between the nozzle body and the elastic retention ring.

Thanks to this idea of solution, the thermocouple, which functions in practice as mechanical blocking element between the elastic ring and the nozzle body, is kept in contact both with the nozzle body and with the heater, via the elastic ring, without any possibility of variation of its position. This guarantees the necessary precision and constancy of detection of the temperature by the thermocouple, and hence of control of the heater, irrespective of possible thermal deformations of the annular retention member.

### Detailed description of the invention

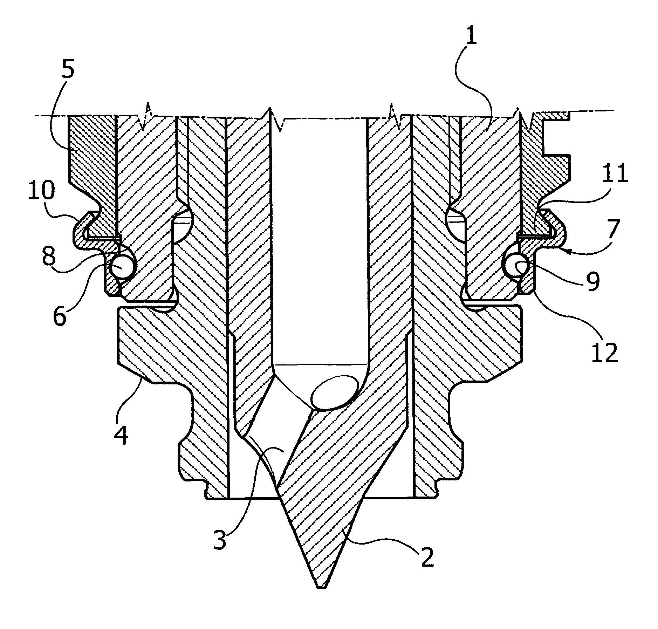

The invention will now be described in detail with reference to the drawing, provided purely by way of non-limiting example, which illustrates in axial cross section and in a simplified form the area of the terminal of an injector for equipment for injection moulding according to the invention.

With reference to the drawing, designated by 1 is the end part of the nozzle body of an injector via which, in use, the plastic material in the molten state coming from a hot chamber is injected within the cavity of a mould through a nozzle terminal 2 provided with one or more injection passages 3.

Designated as a whole by 4 is a ring-nut, via which the nozzle terminal 2 is connected in a known way to the nozzle body 1, and designated by 5 is a tubular heater coaxially fitted in contact of thermal transmission on the nozzle body 1. The tubular heater 5 is equipped, in a way in itself known and not represented in the drawings, with one or more electrical heating resistors controlled via a thermocouple 6 designed for detecting the temperature of the nozzle body 1 in the immediate proximity of the terminal 2.

The heater 5 is blocked axially with respect to the nozzle body 1 via an annular retention member constituted by an elastic ring 7, made of metal material, through the thermocouple 6.

In greater detail, and according to the peculiar characteristic of the invention, the elastic ring 7 has, above the recess 9, an annular lip bent back for engagement 10 on an annular step 11 of the heater 5, and underneath said recess 9 has an annular appendage 12 in contact with the outer surface of the nozzle body 1, immediately underneath the recess 8.

In the case of the example illustrated, the thermocouple 6 is housed within an annular seat defined between the nozzle body 1 and the elastic ring 7. Said annular seat is formed by a pair of facing recesses with substantially semicircular cross section 8, 9 of which the first is formed on the outer surface of the nozzle body 1 immediately adjacent to its end, and the other is formed on the inner surface of the elastic ring 7. In this way, the thermocouple 6 is in direct contact both with the nozzle body 1 and with the heater 5 via the elastic ring 7, and also functions as mechanical blocking member for blocking the elastic ring 7 with respect to the nozzle body 1.

The arrangement described above of the elastic ring 7 ensures that the distance of the thermocouple 6 with respect to the heater 5 is always kept constant, thus guaranteeing a practically absolute precision of detection of the temperature of the terminal part of the injector and hence of the control of the heating action applied by the heater 5.

## Claims

1. An injector for equipment for injection moulding of plastic materials comprising a nozzle body (1) having a terminal (2), a tubular heater (5) inserted in contact of thermal transmission on the nozzle body (1) and blocked axially to this via an annular retention member (7), and a thermocouple (6) for controlling the heater (5) set in the proximity of said terminal (2) of the nozzle body (1), wherein said annular retention member is constituted by an elastic ring (7) having at one end a lip (10) for engagement to the heater (5), said injector being **characterized in that** the thermocouple (6) has an at least partial turn housed within an annular seat (8, 9) defined between said nozzle body (1) and said elastic retention ring (7).

2. The injector according to Claim 1, **characterized in that** said at least partial turn of the thermocouple (6) functions as member for blocking said elastic ring (7) with respect to the nozzle body (1).

3. The injector according to Claim 1 or Claim 2, **characterized in that** said elastic ring (7) has, at the end opposite to said engagement lip (10), an annular appendage (12) in contact with said nozzle body (1).

4. The injector according to Claim 1 or Claim 2, **characterized in that** said annular seat is formed by a pair of facing recesses (8, 9) with substantially semicircular cross section formed, respectively, on the outer surface of the nozzle body (1) and within the annular retention member (7).

## Patentansprüche

1. Einspritzdüse für ein Gerät zum Spritzgießen von Kunststoffmaterialien, umfassend einen Düsenkörper (1), der einen Anschluss (2), eine röhrenförmige Heizeinrichtung (5), die in Wärmeübertragungskontakt an dem Düsenkörper (1) eingefügt und über ein ringförmiges Halteelement (7) an diesem axial blockiert ist, und ein Thermoelement (6), zum Steuern der Heizeinrichtung (5), das in der Nähe des Anschlusses (2) des Düsenkörpers (1) angeordnet ist, wobei das ringförmige Halteelement aus einem elastischen Ring (7) besteht, der an einem Ende eine Lippe (10) für den Eingriff mit der Heizeinrichtung (5) hat, und die Einspritzdüse **dadurch gekennzeichnet ist, dass** das Thermoelement (6) wenigstens eine Teilwindung hat, die in einem ringförmigen Sitz (8, 9) aufgenommen ist, der zwischen dem Düsenkörper (1) und dem elastischen Haltering (7) definiert ist.

2. Einspritzdüse nach Anspruch 1, **dadurch gekennzeichnet, dass** die wenigstens eine Teilwindung des Thermoelementes (6) als Element zum Blockieren des elastischen Ringes (7) in Bezug auf den Düsenkörper (1) fungiert.

3. Einspritzdüse nach Anspruch 1 oder 2, **dadurch gekennzeichnet, dass** der elastische Ring (7) an dem Ende, das der Eingreiflippe (10) gegenüberliegt, einen ringförmigen Fortsatz (12) hat, der mit dem Düsenkörper (1) in Kontakt ist.

4. Einspritzdüse nach Anspruch 1 oder 2, **dadurch gekennzeichnet, dass** der ringförmige Sitz durch zwei einander zugewandte Ausnehmungen (8, 9) mit im wesentlichen halbkreisförmigen Querschnitt ausgebildet ist, die auf der Außenfläche des Düsenkörpers (1) bzw. innerhalb des ringförmigen Halteelementes (7) ausgebildet sind.

## Revendications

1. Injecteur pour un équipement de moulage par injection de matières plastiques comprenant un corps de buse (1) comportant une partie terminale (2), un dispositif de chauffage (5) tubulaire inséré en contact de transmission thermique sur le corps de buse (1) et bloqué axialement sur celui-ci par un élément de retenue (7) annulaire, et un thermocouple (6) pour commander le dispositif de chauffage (5) fixé à proximité de ladite partie terminale (2) du corps de buse (1), dans lequel ledit élément de retenue annulaire est constitué d'une bague élastique (7) comportant, à une extrémité, une lèvre (10) pour une mise en prise avec le dispositif de chauffage (5), ledit injecteur étant **caractérisé en ce que** le thermocouple (6) a un tour au moins partiel logé dans un siège (8, 9) annulaire défini entre ledit corps de buse (1) et ladite bague de retenue élastique (7).

2. Injecteur selon la revendication 1, **caractérisé en ce que** ledit tour au moins partiel du thermocouple (6) agit en tant qu'élément pour bloquer ladite bague élastique (7) par rapport au corps de buse (1).

3. Injecteur selon la revendication 1 ou la revendication 2, **caractérisé en ce que** ladite bague élastique (7) comporte, à l'extrémité opposée à ladite lèvre de mise en prise (10), un appendice (12) annulaire en contact avec ledit corps de buse (1).

4. Injecteur selon la revendication 1 ou la revendication 2, **caractérisé en ce que** ledit siège annulaire est formé par une paire d'évidements (8, 9) se faisant face avec une section transversale sensiblement semi-circulaire formés, respectivement, sur la surface extérieure du corps de buse (1) et dans l'élément de retenue (7) annulaire.
